# EUROPÄISCHE PATENTSCHRIFT

(11) **EP 1 929 380 B1**
(45) Veröffentlichungstag und Bekanntmachung des Hinweises auf die Patenterteilung: **04.12.2013**
(21) Anmeldenummer: 06776734.3
(22) Anmeldetag: 10.08.2006
(51) Int. Cl.: G05B 19/04, G05B 19/12, H02P 6/00, G05B 19/042

(54) **SYSTEM, ANTRIEB UND VERFAHREN ZUR INBETRIEBNAHME EINES ANTRIEBS**
SYSTEM, DRIVE AND METHOD FOR STARTING UP A DRIVE
SYSTEME, ENTRAINEMENT ET PROCEDE DE MISE EN SERVICE D'UN ENTRAINEMENT

(30) Priorität: 07.09.2005 DE 102005042599
(43) Veröffentlichungstag der Anmeldung: 11.06.2008
(73) Patentinhaber: SEW-EURODRIVE GmbH & Co. KG, 76646 Bruchsal (DE)
(72) Erfinder: MAYER, Ralph, 76698 Ubstadt-Weiher (DE); MARMANN, Udo, 68794 Oberhausen-Rheinhausen (DE)
(74) Vertreter: Tüngler, Eberhard
(86) Internationale Anmeldenummer: PCT/EP2006/007913
(87) Internationale Veröffentlichungsnummer: WO 2007/028474

(56) Entgegenhaltungen:
- EP-A1- 0 896 265
- EP-A2- 1 369 755
- EP-A2- 1 422 811
- DE-A1- 10 118 072
- DE-A1- 19 518 689
- DE-U1- 9 313 750
- FR-A1- 2 815 147

## Beschreibung

Die Erfindung betrifft einen Antrieb und ein Verfahren zur Inbetriebnahme eines Antriebs.

Aus der EP 1 369 755 A2 ist ein Antriebsregler bekannt, der ein Chipkartenlssegerät aufweist und zum Einlesen der Chipkarten der Antriebskomponenten geeignet ausgeführt ist.

Aus der DE 101 18 072 A1 ist bekannt, dass bei Austausch eines Winkelsensors eines Elektromotors die Daten des Winkelsensors zusammen mit motorspezitischen Daten gesichert werden an einem externen Speicher. Nach Einsetzen der ausgetauschten Komponente werden die extern gespeicherten Daten mit Daten der ausgetauschten Komponente verglichen und somit überprüft.

Aus der EP 0 896 265 A1 ist ein Antrieb bekannt, bei dem im Motor ein EEPROM fest und unverändert vorgesehen ist, auf dem motorspezifische Daten gespeichert sind. Ein mit dem Motor verbundener Winkelsensor ist über eine Datenleitung mit einer Steuerelektronik, die den Motor speist , verbunden. Wichtig ist dabei, dass die Datenleitung nicht nur zur Übertragung der WinkelInformation sondern auch der motorspezifischen Daten dient.

Der Erfindung liegt daher die Aufgabe zugrunde, eine Vorrichtung und ein Verfahren weiterzubilden, wobei die Kosten des Betreibens inklusive Inbetriebnahme verringert werden sollen und die Fehler vermeidbarer sein sollen.

Erfingdungsgemäß wird die Aufgabe bei dem Antrieb nach den in Anspruch 1 und bei dem Verfahren nach den in Anspruch 6 angegebenen Merkmalen gelöst.

Wichtige Merkmale der Erfindung bei dem Antrieb sind, dass der Antrieb zumindest einen Elektromotor und eine L/A-Einheit zum Auslesen eines Datenträgers umfasst,
wobei die Inbetriebnahme des Antriebs durch Auslesen des Datenträgers vorgesehen ist,
wobei der Datenträger über eine Schnittstelle am Anschlusskasten des Elektromotors angeordnet ist,
wobei die Schnittstelle eine mechanische Haltevorrichtung für den Datenträger ist,
wobei die L/A-Einhelt mit einem Kommunikationssystem, das als Bussystem, wie Feldbus, ausgeführt ist, verbunden ist zum Datenaustausch,
wobei die L/A-Einheit innerhalb eines Deckels des Anschlusskastens des Elektromotors vorgesehen ist und beim Aufsetzen des Deckels auf den Anschlusskasten mitverbunden wird und der Datenträger auslesbar ist, so dass mit dem Aufsetzen des Deckels, wenn der Antrieb In der Anlage fertig installiert und montiert ist, die Daten des Datenträgers dem Kommunikationssystem zur Verfügung stehen.

Von Vorteil ist dabei, dass der Datenträger bei Fertigung des Motors mit den Daten des Motors und gegebenenfalls weiteren Daten beschreibbar ist und somit bei Inbetriebnahme in der Maschine oder Anlage des Kunden lesbar ist und die Daten dort dann zur Inbetriebnahme, beispielsweise eines Umrichters oder zur Inbetriebnahme der ein Kommunikationssystem umfassenden Anlage zur Verfügung stehen.

Bei einer vorteilhaften Ausgestaltung umfasst der Elektromotor eine Bremse. Von Vorteil ist dabei, dass auch die Daten der Bremse und nicht nur des Motors in dem Datenträger abspeicherbar sind.

Bei einer vorteilhaften Ausgestaltung ist die erste Schnittstelle eine mechanische Haltevorrichtung für den Datenträger. Von Vorteil ist dabei, dass eine einfache und kostengünstige Realisierung ermöglicht ist.

Bei einer vorteilhaften Ausgestaltung ist die erste Schnittstelle elektromechanisch ausgeführt, insbesondere zur mechanischen Verbindung, wie Halten, und zusätzlich zur elektronischen Datenübertragung an die L/A-Einheit. Von Vorteil ist dabei, dass zusätzlich Daten übertragbar sind, insbesondere leitungsgebunden zu einer L/A-Einheit.

Bei einer vorteilhaften Ausgestaltung ist die erste Schnittstelle im oder am Anschlusskasten des Elektromotors vorgesehen. Von Vorteil ist dabei, dass der Datenträger geschützt im Kasten anbringbar ist oder leicht und schnell zugänglich an der Außenseite des Kastens.

Bei einer vorteilhaften Ausgestaltung ist an der L/A-Einheit eine zweite Schnittstelle zur Aufnahme des Datenträgers vorgesehen, insbesondere zur wahlweisen Aufnahme. Von Vorteil ist dabei, dass die zweite Schnittstelle zur ersten Schnittstelle derart entsprechend kompatibel ausführbar ist, dass der Datenträger von der ersten auf die zweite Schnittstelle umsteckbar ist.

Bei einer vorteilhaften Ausgeslaltung ist die zweite Schnittstelle elektromechanisch ausgeführt, insbesondere zur mechanischen Verbindung, wie Halten, und zusätzlich zur elektronischen Datenübertragung an die L/A-Einheit. Von Vorteil ist dabei, dass nach dem Umstecken des Datenträgers auf die zweite Schnittstelle eine Datenübertragung der Daten vom Datenträger zur L/A-Einheit und von dort zu nachfolgenden Geräten oder zu einem Kommunikationssystem ermöglicht ist.

Bei einer vorteilhaften Ausgestaltung Ist die L/A-Einheit im Deckel eines Anschlusskastens des Elektromotors vorgesehen. Von Vorteil ist dabei, dass bei Aufstecken des Deckels, also eines Oberteils, auf das Unterteil des Anschlusskastens auch die L/A-Einheit derart nahe oder In Kontakt bringbar ist zum Datenträger, dass die Datenübertragung ermöglicht wird.

Bei einer vorteilhaften Ausgestaltung ist die L/A-Einheit ein Gehäuse auf oder mit einem Gerät kombiniert und/oder integriert ausgeführt. Von Vorteil ist dabei, dass die Daten vom Gerät verarbeltbar sind. Außerdem ist die gehäusebildende Funktion für die Einheit vom Gehäuse des Gerätes ausführbar ebenso wie auch die Energieversorgung vom Gerät ausführbar ist.

Bei einer vorteilhaften Ausgestaltung ist das Gerät ein Umrichter, insbesondere ein Umrichter zur Versorgung des Elektromotors. Alternativ ist das Gerät ein Sanftanlaufgerät oder Starter, insbesondere zum sanften Starten des Elektromotors. Bei einer weiteren Alternative ist das Gerät ein Motorschalter, insbesondere zum Schalten des Elektromotors. Von Vorteil ist dabei, dass die Daten des Datenträgers zur Parametrierung dieser Geräte dienen und/oder über den Feldbusanschluss dieser Geräte an weitere Feldbusteilnehmer übertragbar sind. Statt des Feldbusses ist auch ein anderes Bussystem oder Kommunikationssystem vorteilhaft einsetzbar. Die Daten umfassen hierbei nicht nur zur Parametrierung der Geräte notwendige Parameter sondern auch auftragsbezogene, maschinenbezogene oder anlagenbezogene Daten. Letztere werden von den Teilnehmern verwendet, beispielsweise zur Auslösung von Plausibilitätsüberprüfungen oder terminabhängigen Vorgängen, wie Wartungswarnungen und dergleichen.

Bei einer vorteilhaften Ausgestaltung ist die L/A-Einheit mit einem Kommunikationssystem, insbesondere mit einem Bussystem, wie Feldbus oder dergleichen, zum Datenaustausch verbunden. Von Vorteil ist dabei, dass die Daten an weitere Busteilnehmer, wie Zentralrechner oder Antriebssysteme mit Busanschluss übertragbar sind.

Bei einer vorteilhaften Ausgestaltung ist das Gerät mittels zumindest Steckverbinder mit dem Elektromotor, insbesondere seinen Anschlussvorrichtungen im Anschlusskasten verbindbar. Von Vorteil ist dabei, dass das Verbinden schnell und sicher ausführbar ist.

Bei einer vorteilhaften Ausgestaltung umfasst das Gehäuse des Geräts zumindest einen Kühlkörper. Von Vorteil ist dabei, dass das Gerät Leistungselektronik enthalten darf trotz der räumlichen Nähe zum Motor. Insbesondere ist eine Wärmesperre zum Motor hin vorgesehen.

Bei einer vorteilhaften Ausgestaltung ist das Gerät mit einem Kommunikationssystem, insbesondere mit einem Bussystem, wie Feldbus oder dergleichen, verbunden zum Datenaustausch. Von Vorteil ist dabei, dass die Daten an weitere Busteilnehmer übertragbar sind, wobei die Daten sich unterscheiden können von denjenigen Daten, die zur Parametrierung des Gerätes notwendig sind.

Bei einer vorteilhaften Ausgestaltung ist das Gerät separat vom Elektromotor vorgesehen, insbesondere im Schaltschrank der Anlage oder im Feld der Anlage. Von Vorteil ist dabei, dass bei Inbetriebnahme der Bediener nur den Datenträger am Motor abnehmen muss und bei der Schnittstelle des Gerätes einstecken muss. Somit ist die Inbetriebnahme einfach ausführbar.

Bei einer vorteilhaften Ausgestaltung ist der Datenträger von der L/A-Einheit berührungslos oder leitungsgebunden auslesbar. Von Vorteil Ist dabei, dass bei berührungsloser Auslesung Anschlussvorrichtungen einsparbar sind. Bei leitungsgebundener Auslesung sind die Störsignale reduzierbar.

Bei einer vorteilhaften Ausgestaltung ist der Datenträger von der L/A-Einheit mechanisch, insbesondere als Lochkarte, optisch oder induktiv oder magnetisch oder elektrisch auslesbar. Von Vorteil ist dabei, dass eine einfache mechanische Lösung. die Langzeitstabilität gewährleistet, realisierbar ist. Ansonsten sind berührungslose Varianten, wie optische, induktive oder magnetische, ausführbar mit dem Fachmann bekannten Vorteilen.

Bei einer vorteilhaften Ausgestaltung umfasst der Datenträger einen Speicher zum Speichern von Parametern, die zur Inbetriebnahme des Umrichters verwendbar sind, wie insbesondere beispielsweise elektrische und mechanische Nenndaten des Elektromotors, Nenndaten der Bremse und/oder Herstelldatum des Elektromotors. Von Vorteil ist dabei, dass verschiedene Daten auf dem Datenträger speicherbar sind.

Bei einer anderen vorteilhaften Ausgestaltung ist die UA-Einheit nicht verbunden mit dem Elektromotor, insbesondere weder mechanisch noch elektronisch. Von Vorteil ist dabei, dass der Bediener bei der Inbetriebnahme des Motors den Datenträger aus diesem herauszieht und dann mit der Einheit verbindet zur Datenübertragung. Diese gibt dann die Daten weiter an ein verbundenes Kommunikationssystem.

Wesentliche Merkmale bei dem Antrieb sind, dass er ein vorgenanntes System umfasst, wobei die Inbetriebnahme des Antriebs durch Auslesen des Datenträgers vorgesehen ist. Von Vorteil ist dabei, dass die Inbetriebnahme schnell und einfach ausführbar ist. Insbesondere muss der Bediener keine tiefen Kenntnisse über Parameter haben und ist trotzdem in der Lage, den Antrieb zu parametrieren.

Wesentliche Merkmale bei dem Verfahren zur Herstellung und/oder Inbetriebnahme eines Antriebs sind, dass
- ein Elektromotor hergestellt wird,
- ein Datenträger mit Daten, insbesondere den Typenschild-Daten des Elektromotors, beschrieben wird,
- der Datenträger mit dem Elektromotor mechanisch verbunden wird,
- bei der Inbetriebnahme in einer Maschine oder Anlage eine UA-Einheit in Verbindung gebracht wird mit dem Datenträger zum Auslesen der Daten,
- die Daten übermittelt werden an ein Kommunikationssystem oder an einen Umrichter, der den Elektromotor versorgt.

Von Vorteil ist dabei, dass die Inbetriebnahme sehr einfach ausführbar ist und somit der Bediener keine hohe Ausbildung benötigt und die Wahrscheinlichkeit des Auftretens von Fehlern beim Inbetriebnehmen reduzierbar ist.

Insbesondere wird zur Inbetriebnahme der Datenträger vom Elektromotor getrennt und mit der L/A-Einheit verbunden. Von Vorteil ist dabei, dass der Bediener keine Parameter eingeben muss, also auch keine Fehler hierbei auftreten können, sondern nur der Datenträger eingesteckt werden muss.

Alternativ wird zur Inbetriebnahme die L/A-Einheit auf eine Steckverbinder-Schnittstelle des Elektromotors aufgesteckt. Von Vorteil ist dabei, dass die Verbindung und somit die Inbetriebnahme besonders einfach und schnell ausführbar ist.

Weitere Vorteile ergeben sich aus den Unteransprüchen.

### Bezugszeichenliste

1 Datenträger
2 Anschtusskasten
3 Elektromotor
4 Lese- und Auswerteeinheit (UA-Einheit)
10 Schnittstelle
K Kommunikationssystem
A Lese- und Auswerteeinheit (L/A-Einheit)
FU Umrichter

Die Erfindung wird nun anhand von Abbildungen näher erläutert:

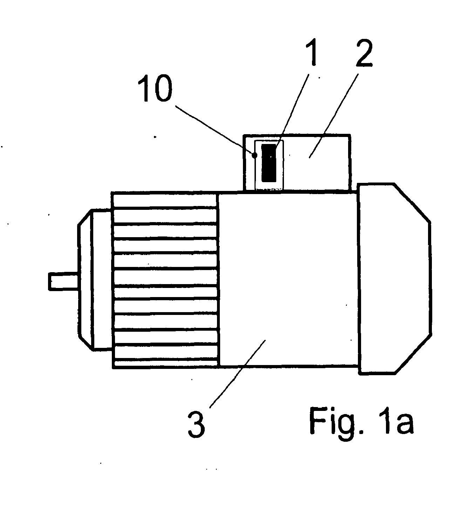

In der Figur 1a ist ein erfindungsgemäßes System mit einem Elektromotor 3 als Antriebskomponente schematisiert dargestellt, wobei ein Datenträger 1 an einer elektromechanischen Schnittstelle 10 Im Anschlusskasten 2 vorgesehen ist. Die Schnittstelle 10 umfasst Steckverbindungen. Somit ist der Datenträger 1 steckbar verbindbar, also schnell und einfach verbindbar. Der Anschlusskasten 2 ist auf das Statorgehäuse aufgesetzt und ist ein gehäusebildendes Teil für die Anschlussvorrichtungen, welche zum Verbinden mit den den Elektromotor 3 versorgenden Leitungen vorgesehen sind. Der abnehmbare Deckel des Anschlusskastens kann als einfaches Gussteil ausgeführt sein oder aber auch mit integrierter Elektronik, wie Umrichtetelektronik, Sanftanlaufelektronik oder Motorschalter-Elektronik ausgeführt sein. Die jeweilige zugehörige Leistungselektronik ist bei einem der erfindungsgemäßen Ausführungsbeispiele entwärmt über Kühlvorrichtungen am Deckel.

Bei weiteren erfindungsgemäßen Ausführungsbeispielen ist die Schnittstelle nur eine mechanische Schnittstelle, also beispielsweise als Haltevorrichtung zum Halten des Datenträgers 1 ausgeführt.

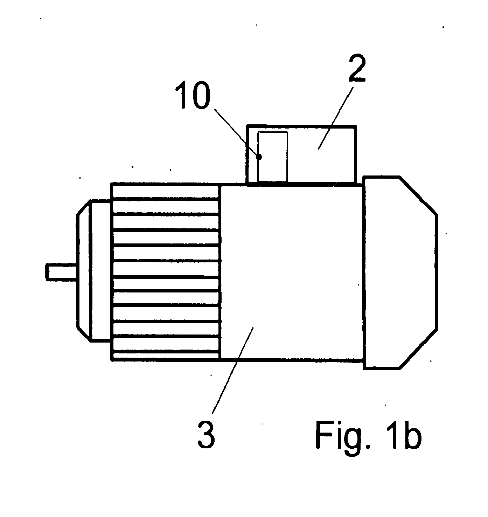

In der Figur 1 b ist die Lese- und Auswerteeinheit 4, die hier auch als L/A-Einheit bezeichnet wird, gezeigt, wobei diese die elektromechanische Schnittstelle umfasst, in die der am Anschlusskasten abgezogene Datenträger 1 eingesteckt und somit mechanisch und elektronisch verbunden ist. Vorzugsweise umfasst diese Schnittstelle entsprechende Steckverbindungen wie die Schnittstelle 10. so dass der Datenträger wiederum schnell und einfach einsteckbar ist.

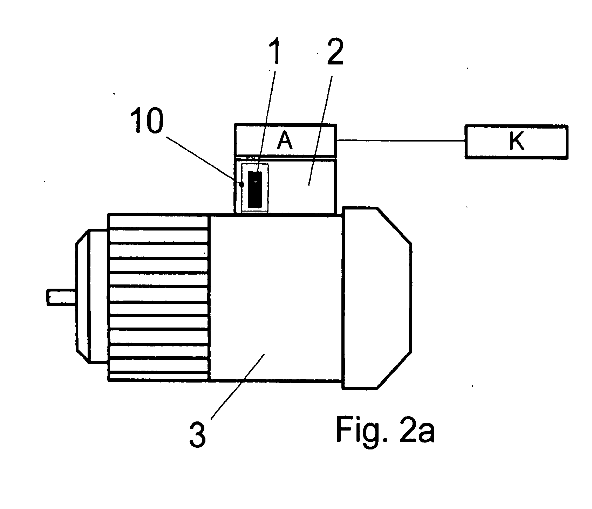

Bei dem erfindungsgemäßen System nach der Figur 2a ist der Datenträger über die Schnittstelle 10 am Anschlusskasten 2 des Elektromotors 3 vorgesehen. Die Lese- und Auswerteeinheit (L/A-Einheit) A ist am Anschlusskasten an- oder aufmontiert und zur Datenübertragung elektronisch mit einem Kommunikationssystem K verbunden.

Beispielsweise ist es bei einem weiteren erfindungsgemäßen System, wiederum entsprechend Figur 2a, vorteilhaft, die L/A-Einheit innerhalb eines Deckels, also Gehäuseteils, anzubringen. Somit wird die L/A-Einheit beim Aufsetzen des Deckels auf seinen Anschlusskasten mitverbunden und der Datenträger auslesbar. Wenn also der Antrieb in der Anlage fertig installiert und montiert ist, stehen die Daten des Datenträgers dem Kommunikationssystem K zur Verfügung. Somit bewirkt das sowieso notwendige Verbinden des Deckels mit dem Anschlusskastenunterteil auch die Lesbarkeit des Datenträgers.

Der Datenträger kann beispielsweise Typenschildinformationen des Motors beinhalten und auch des mit diesem verbundenen Geber.

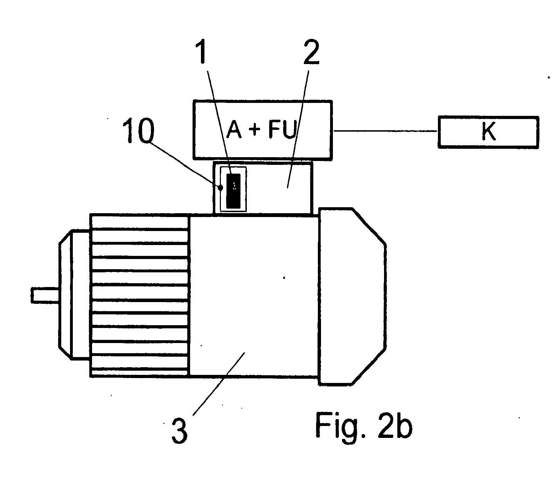

Bei dem erfindungsgemäßen System nach der Figur 2b ist statt des Deckels ein Umrichter FU auf das Anschlusskastenunterteil aufsleckbar und verbindbar zur Versorgung des Elektromotors 3. Dabei ist der Umrichter FU mit der UA-Einheit A integriert ausgeführt und kann somit sofort den Typ des Motors 3 und die zugehörigen Parameter erkennen. Entsprechend werden dann die Parameter des Umrichters FU festgelegt und auch an das Kommunikationssystem K übertragbar. Die Inbetriebnahme ist somit sehr viel schneller ermöglicht. Es handelt sich also bei der Figur 2b um einen Umrichtermotor. Solche Antriebe sind sehr kompakt ausgeführt, da Motor 3 und Umrichter FU eine Einheit bilden.

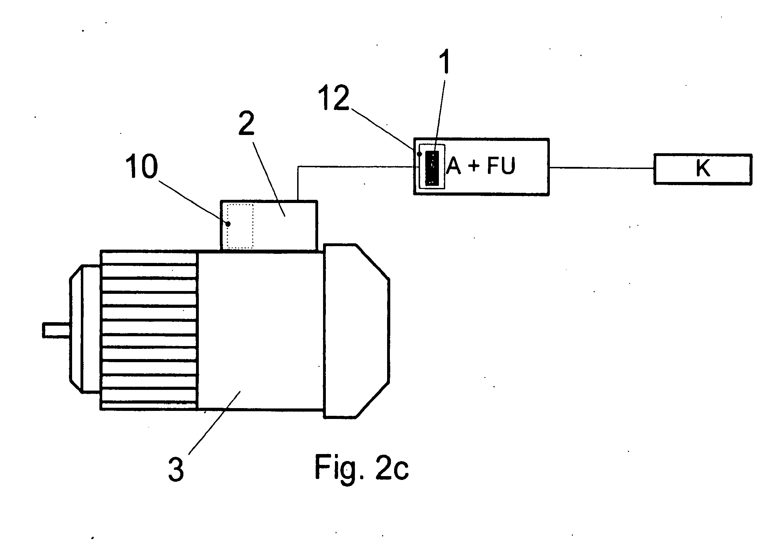

Bei dem erfindungsgemäßen System nach der Figur 2c ist der Umrichter FU separiert vom Motor 3 angebracht, beispielsweise im Schaltschrank einer Anlage. Der Umrichter FU ist also mit dem Motor 3 mit Leistungskabeln verbunden, damit der Umrichter FU den Motor 3 versorgen und steuern kann, und wird im Schallschrank mechanisch geschützt und befestigt. Somit sind keine solch hohen Anforderungen an die Schutzart an ihn gestellt, wie im Vergleich zum Ausführungsbeispiel nach Figur 2b. Der Datenträger 1 befindet sich am Umrichter FU und ist dort über die Schnittstelle 12 verbunden. Der Umrichter FU ist wiederum zum Datenaustausch mit dem Kommunikationssystem K verbunden, vorzugsweise über Feldbus oder ein anderes Bussystem. In Figur 2c ist der Datenträger 1 aus der Schnittstelle 10 des Anschlusskastens herausgezogen und In die Schnittstelle 12 des Umrichters FU eingesteckt. Somit können Parameter bei der Fertigung dem Datenträger 1 eingespelchert werden und dieser mit dem Motor verbunden ausgeliefert werden. Bel Inbetriebnahme muss dann nur der Datenträger in den Umrichter FU eingesteckt werden und somit sind dann die motor-bezogenen Parameter bekannt. Es sind aber auch auftragsbezogene Daten im Datenträger abspeicherbar. Diese auftragsbezogenen Daten können auch anwendungsbezogene Daten umfassen, also Daten, die für die Anlage oder Maschine kennzeichnend sind und beim Steuern und Regeln des den Elektromotor 3 umfassenden Antriebs vom Umrichter FU zu berücksichtigen sind.

Der Datenträger kann aus der Schnittstelle 10, beispielsweise einer Haltevorrichtung, entnommen werden. Somit ist der Datenträger vom Motor trennbar und kann in der Aufnahmevorrichtung der motorunabhängigen L/A-Einheit eingesteckt werden. Der Datenträger kann auch die gesamte Inbetriebnahmeparameter für den Umrichter FU enthalten.

Die Datenträgerinformation kann mechanisch, magnetisch oder elektrisch realisiert werden. Entsprechend umfasst der Datenträger beispielsweise eine Lochkarte oder ein Magnetstreifen oder ein Halbleiter-Chip.

Die Auswertung der Datenträgerinformation kann berührungslos, wie optisch, magnetisch, oder induktiv erfolgen. Es sind also auch Datenträger verwendbar, die als RFID-Tag realisiert sind. Somit sind auch Transpondertechnik oder OFW-Technik (Oberflächenwellensensortechnik ) anwendbar. Alternativ ist auch eine leitungsgebundene Datenübertragung realisierbar.

Bei weiteren erfindungsgemäßen Ausführungsbeispielen werden Daten des Datenträgers nicht nur an den Umrichter übertragen sondern auch an ein übergeordnetes Kommunikationssystem. Dies betrifft also auch Daten, die nicht auf die Betriebsweise des Umrichters bezogen sind und keine Parameter des Umrichters oder der dort lauffähigen Programme sind. Übergeordnete Systeme können die Daten verarbeiten. Beispielsweise ist das Herstelldatum des Motors vom Umrichter nicht verwendbar. Die zentrale Steuerung kann dieses Datum Jedoch verwenden, um Wartungstermine zu berechnen oder andere zeitanhängige Aktionen auszulösen, wie Austausch des Motors, Nachstellen der Bremse oder dergleichen.

## Patentansprüche

1. Antrieb, umfassend zumindest einen Elektromotor (3) mit einem Anschlusskasten (2) und eine Lese- und Auswerteeinheit (4) zum Auslesen eines Datenträgers (1),
wobei die Inbetriebnahme des Antriebs durch Auslesen des Datenträgers (1) vorgesehen ist,
wobei der Datenträger über eine Schnittstelle (10) am Anschlusskasten (2) des Elektromotors (3) angeordnet ist,
wobei die Schnittstelle (10) eine mechanische Haltevorrichtung für den Datenträger (1) ist,
wobei die Lese- und Auswerteeinheit (4) mit einem Kommunikationssystem, das als Bussystem, wie Feldbus, ausgeführt ist, verbunden ist zum Datenaustausch,
**dadurch gekennzeichnet, dass**
die Lese- und Auswerteeinheit (4) innerhalb eines Deckels des Anschlusskastens (2) des Elektromotors (3) vorgesehen ist und beim Aufsetzen des Deckels auf den Anschlusskasten (2) mitverbunden wird und der Datenträger (1) auslesbar ist, so dass mit dem Aufsetzen des Deckels, wenn der Antrieb in der Anlage fertig installiert und montiert ist, die Daten des Datenträgers (1) dem Kommunikationssystem zur Verfügung stehen.

2. Antrieb nach mindestens einem der vorangegangenen Ansprüche,
**dadurch gekennzeichnet, dass**
der Elektromotor (3) eine Bremse umfasst.

3. Antrieb nach mindestens einem der vorangegangenen Ansprüche,
**dadurch gekennzeichnet, dass**
der Datenträger (1) von der Lese- und Auswerteeinheit (4) berührungslos oder leitungsgebunden auslesbar ist.

4. Antrieb nach mindestens einem der vorangegangenen Ansprüche,
**dadurch gekennzeichnet, dass**
der Datenträger (1) von der Lese- und Auswerteeinheit (4) optisch oder induktiv oder magnetisch oder elektrisch auslesbar ist

5. Antrieb nach mindestens einem der vorangegangenen Ansprüche,
**dadurch gekennzeichnet, dass**
der Datenträger (1) einen Speicher umfasst zum Speichern von Parametern, die zur Inbetriebnahme eines Umrichters verwendbar sind, wie insbesondere beispielsweise elektrische und mechanische Nenndaten des Elektromotors (3), Nenndaten der Bremse und/oder Herstelldatum des Elektromotors (3).

6. Verfahren zur Inbetriebnahme eines Antriebs nach einem der Ansprüche 1 bis 5, wobei das Verfahren die folgenden Schritte aufweist:
- ein Elektromotor (3) hergestellt wird,
- ein Datenträger (1) mit Typenschild-Daten des Elektromotors (3) beschrieben wird,
- der Datenträger (1) mit dem Elektromotor (3) an einer Schnittstelle, die am Anschlusskasten (2) des Elektromotors (3) angeordnet ist, mechanisch verbunden wird,
- **dadurch gekennzeichnet, dass**
- während der Inbetriebnahme des Antriebs in einer Maschine oder Anlage, beim Aufsetzen des Deckels auf den Anschlusskasten (2) des Elektromotors (3) eine Lese- und Auswerteeinheit (4) in Verbindung mit dem Datenträger (1) zum Auslesen der Daten gebracht wird, so dass, wenn der Antrieb in der Anlage fertig installiert und montiert ist, die Daten des Datenträgers (1) dem Kommunikationssystem zur Verfügung stehen.

## Claims

1. Drive, comprising at least one electric motor (3) having a connecting box (2) and a reading and evaluating unit (4) for reading a data carrier (1),
wherein the start up of the drive is provided by reading the data carrier (1),
wherein the data carrier is arranged via an interface (10) on the connecting box (2) of the electric motor (3),
wherein the interface (10) is a mechanical holding device for the data carrier (1),
wherein the reading and evaluating unit (4) is connected to a communication system, in the form of a bus system, such as Fieldbus, for data exchange,
**characterised in that**
the reading and evaluating unit (4) is provided inside a cover of the connecting box (2) of the electric motor (3) and is connected along with the cover when the latter is being put onto the connecting box (2), and the data carrier (1) is readable, so that once the cover is put on and when the drive is fully installed and assembled in the installation, the data of the data carrier (1) are available to the communication system.

2. Drive according to at least one of the preceding claims,
**characterised in that**
the electric motor (3) comprises a brake.

3. Drive according to at least one of the preceding claims,
**characterised in that**
the data carrier (1) is readable by the reading and evaluating unit (4) in a contactless or wire-bound manner.

4. Drive according to at least one of the preceding claims,
**characterised in that**
the data carrier (1) is readable by the reading and evaluating unit (4) optically or inductively or magnetically or electrically.

5. Drive according to at least one of the preceding claims,
**characterised in that**
the data carrier (1) comprises a memory for storing parameters which are usable for the start up of a converter, such as in particular, for example, electrical and mechanical ratings of the electric motor (3), ratings of the brake and/or date of manufacture of the electric motor (3).

6. Method for the start up of a drive according to one of Claims 1 to 5,
the method having the following steps:
- an electric motor (3) is manufactured,
- a data carrier (1) is written with rating plate data of the electric motor (3),
- the data carrier (1) is mechanically connected to the electric motor (3) at an interface which is arranged on the connecting box (2) of the electric motor (3),
- **characterised in that**
- during the start up of the drive in a machine or installation, when the cover is being put onto the connecting box (2) of the electric motor (3), a reading and evaluating unit (4) is brought into connection with the data carrier (1) in order to read out the data, so that when the drive is fully installed and assembled in the installation, the data of the data carrier (1) are available to the communication system.

## Revendications

1. Entraînement, comprenant au moins un moteur électrique (3) avec un boîtier de raccordement (2) et une unité de lecture et d'évaluation (4) permettant de lire un support de données (1),
la mise en service de l'entraînement étant prévue par lecture du support de données (1),
le support de données étant disposé sur le boîtier de raccordement (2) du moteur électrique (3) par l'intermédiaire d'une interface (10),
l'interface (10) étant un dispositif de fixation mécanique pour le support de données (1),
l'unité de lecture et d'évaluation (4) étant reliée à un système de communication qui est réalisé sous la forme d'un système de bus, comme un bus de terrain, pour l'échange de données,
**caractérisé en ce que**
l'unité de lecture et d'évaluation (4) est prévue à l'intérieur d'un couvercle du boîtier de raccordement (2) du moteur électrique (3) et connectée lors de la pose du couvercle sur le boîtier de raccordement (2), rendant possible la lecture du support de données (1), de sorte qu'avec la pose du couvercle, quand l'entraînement est installé et monté dans l'installation, les données du support de données (1) sont mises à la disposition du système de communication.

2. Entraînement selon au moins une des revendications précédentes,
**caractérisé en ce que**
le moteur électrique (3) comprend un frein.

3. Entraînement selon au moins une des revendications précédentes,
**caractérisé en ce que**
le support de données (1) peut être lu sans contact ou par fil par l'unité de lecture et d'évaluation (4).

4. Entraînement selon au moins une des revendications précédentes,
**caractérisé en ce que**
le support de données (1) peut être lu par voie optique, inductive ou magnétique par l'unité de lecture et d'évaluation (4).

5. Entraînement selon au moins une des revendications précédentes,
**caractérisé en ce que**
le support de données (1) comprend une mémoire pour mémoriser des paramètres qui peuvent être utilisés pour la mise en service d'un variateur de vitesse, comme en particulier des données nominales électriques et mécaniques du moteur électrique (3),
des données nominales du frein et/ou la date de fabrication du moteur électrique (3).

6. Procédé de mise en service d'un entraînement selon une des revendications 1 à 5, lequel procédé présente les étapes suivantes :
- un moteur électrique (3) est fabriqué,
- les données de la plaque signalétique du moteur électrique (3) sont écrites sur un support de données (1),
- le support de données (1) est relié mécaniquement au moteur électrique (3) à une interface qui est disposée sur le boîtier de raccordement (2) du moteur électrique (3),
- **caractérisé en ce que**
- pendant la mise en service de l'entraînement dans une machine ou une installation, lors de la pose du couvercle sur le boîtier de raccordement (2) du moteur électrique (3), une unité de lecture et d'évaluation (4) est mise en liaison avec le support de données (1) pour la lecture des données, de sorte que quand l'entraînement est installé et monté dans l'installation, les données du support de données (1) sont mises à la disposition du système de communication.
